Europäisches Patentamt

European Patent Office

Office européen des brevets

(19)

(11) Veröffentlichungsnummer: **0 262 496**

**A2**

(12) **EUROPÄISCHE PATENTANMELDUNG**

(21) Anmeldenummer: **87113364.1**

(22) Anmeldetag: **12.09.87**

(51) Int. Cl.⁴: **C09D 7/14** , C09D 17/00 , C09D 5/44

(30) Priorität: **23.09.86 AT 2538/86**

(43) Veröffentlichungstag der Anmeldung:
**06.04.88 Patentblatt 88/14**

(84) Benannte Vertragsstaaten:
**DE ES FR GB IT**

(71) Anmelder: **Vianova Kunstharz Aktiengesellschaft**

**A-8402 Werndorf(AT)**

(72) Erfinder: **Paar, Willibald, Dr.**
**Schanzelgasse 19**
**A-8010 Graz(AT)**
Erfinder: **Sodin, Clemens**
**Berliner Ring 71**
**A-8010 Graz(AT)**

(74) Vertreter: **Pitter, Robert, Dr. et al**
**Vianova Kunstharz Aktiengesellschaft**
**Postfach 191 Leechgasse 21**
**A-8011 Graz(AT)**

(54) **Verfahren zur Herstellung von Pigmentpasten für wasserverdünnbare Lacke.**

(57) Die Erfindung betrifft Pigmentpasten für wasserverdünnbare Lacke, insbesonders für das 2-Komponenten-Nachsetzverfahren bei der Elektrotauchlackierung.

Das Verfahren ist dadurch gekennzeichnet, daß man Katalysatoren oder andere wasserunverträgliche Zusatzstoffe zusammen mit einem Teil des Hauptbindemittels vor dem Verdünnen mit Wasser in das Pastenharz einarbeitet.

Durch diese Maßnahme wird insbesonders beim 2-Komponenten-Nachsetz-Verfahren bei der Elektrotauchlackierung die Lagerbeständigkeit der in verdünnter Form vorliegenden Hauptbindemittelkomponente verbessert und die Wirksamkeit der Zusätze erhöht.

EP 0 262 496 A2

### Verfahren zur Herstellung von Pigmentpasten für wasserverdünnbare Lacke.

Die Erfindung betrifft Pigmentpasten für wasserverdünnbare Lacke, insbesonders für das 2-Komponenten-Nachsetzverfahren bei der Elektrotauchlackierung.

Bei der Elektrotauchlackierung wird das im wäßrigen Medium befindliche Farbmaterial als festkörperreicher Überzug auf das Substrat niedergeschlagen und mit dem lackierten Objekt aus dem Bad entfernt. Um eine Verarmung des Badmaterials zu vermeiden, muß entsprechendes Material wieder dem Bad zugeführt werden. Dies kann -wie bereits seit langem z. B. aus WEIGEL, Elektrophoreselacke, Wissenschaftl. VerlagsgesmbH., Stuttgart, 1967, oder YEATES, Electropainting, R. Draper LTD, Teddington, 1970, bekannt ist - entweder durch Nachgabe von unterneutralisierter, konzentrierter Pigment-Bindemittelpaste oder, unter Verwendung von Dialyseeinrichtungen zur Entfernung des freigesetzten Neutralisationsmittels und des überschüssigen wäßrigen Mediums, durch Nachgabe verdünnter Lackmaterialien erfolgen.

Bei der Führung von Elektrotauchlackieranlagen, insbesonders im Falle der kathodischen Abscheidung, hat es sich als vorteilhaft erwiesen, die Zugabe des Nachsetzmaterials mit zwei getrennten Komponenten, nämlich einer höherpigmentierten Farbkomponente und einer Klarlackkomponente, durchzuführen. Eine gegebenenfalls automatische Steuerung der Badführung wird dadurch wesentlich erleichtert.

Kombinationen wäßriger Pigmentpasten mit Klarlackdispersionen werden u. a. in den US-PSS 4,035,275, 4,081,343 oder 4,186,124 beschrieben. In der DE 30 40 419 wird zusätzlich als weitere Komponente eine wäßrige Katalysatorpaste eingesetzt. Dabei handelt es sich um eine Vermahlung von Dibutylzinnoxid in dem auch für die Anreibung der Pigmente verwendeten Harz.

Bei diesem sogenannten 2-Komponenten-Nachsetzverfahren hat es sich jedoch gezeigt, daß auch bei guter Verträglichkeit des Pastenharzes mit dem Hauptbindemittel die Bildung homogener Mischungen selbst unter Verwendung spezieller Rühr-oder Vormischeinrichtungen nicht in optimaler Weise erfolgt.

Insbesondere werden mit der Pigmentkomponente eingebrachte Materialien, wie Vernetzungskatalysatoren, Verlaufmittel oder Entschäumungsmittel etc., welche in Kombination mit dem Hauptbindemittel wirksam werden sollen, in ungenügender Weise an die Harzmicellen des Hauptbindemittels herangebracht.

Die unmittelbare Einarbeitung der in den meisten Fällen wasserunlöslichen Zusatzstoffe in das Hauptbindemittel führt sehr oft zu einer Beeinträchtigung der Lagerstabilität der in verdünnter Form vorliegenden Dispersion dieser Badkomponente, sowie zu einer Verringerung der Wirkamkeit der Zusätze.

Es wurde nun gefunden, daß diese Schwierigkeiten überwunden werden können, wenn man einen oder mehrere dieser Zusatzstoffe mit einem Teil des Hauptbindemittels in die Pigmentkomponente einbringt. Da sich in diesem Fall der Zusatzstoff bereits in den Micellen des Hauptbindemittels befindet, erfolgt auch die homogene Verteilung des Zusatzstoffes in der Klarlackkomponente in wesentlich günstigerer Weise.

Insbesonders bei der Nachgabe der Komponenten in lösungsmittelarmer Dispersionsform, wie sie bei "low-VOC"-Forderungen (volatile organic c omposition) seitens der Verbraucher bzw. der Gesetzgebung in verschiedenen Ländern erfolgen muß, ist nur auf diese Weise eine entsprechende Verteilung zu erreichen.

Die vorliegende Erfindung betrifft demgemäß ein Verfahren zur Herstellung von Pigmentpasten für wasserverdünnbare Lacke, insbesondere für das Zweikomponenten-Nachsetzverfahren bei der Elektrotauchlackierung mit katalysierten Lacksystemen, welches dadurch gekennzeichnet ist, daß man in das für das Lacksystem eingesetzte Pigmentpastenharz (A) die Gesamtmenge oder einen Teil der notwendigen Katalysatoren und/oder anderer Zusatzstoffe (C) und einen Teil des für das Lacksystem eingesetzten Hauptbindemittels (B), vor oder nach der Vermahlung mit den Pigmenten (D) bzw. vor oder nach der teilweisen oder vollständigen Neutralisation der salzbildenden Gruppen, homogen einmischt.

Die Erfindung betrifft weiters die nach diesem Verfahren hergestellten Pigmentpasten, sowie deren Einsatz in Elektrotauchlacken insbesonders in kathodisch abscheidbaren Elektrotauchlacken.

Eine bevorzugte Ausführungsform zur Erzielung der für die erfindungsgemäßen Pigmentkomponenten charackteristischen Effekte ist dadurch gekennzeichnet, daß man

(A) 70 bis 30, vorzugsweise 70 bis 50 Gew.-% eines Pigmentpastenharzes (A) mit (B) 30 bis 70, vorzugsweise 30 bis 50 Gew.-% des für das Lacksystem eingesetzten Hauptbindemittels (B), welches mit der Gesamtmenge oder einem Teil der für das Lacksystem erforderlichen Zusatzkomponenten (C) homogen vermischt ist, mischt und nach vollständiger oder teilweiser Neutralisation der salzbildenden Gruppen soweit mit Wasser verdünnt, daß nach Zugabe der Pigmente (D) für die nachfolgende Vermahlung eine für das Mahlaggregat optimale Viskosität erreicht wird.

Gegebenenfalls kann aber die Mischung der Komponenten auch in anderer Reihenfolge beispielsweise in der nachfolgend schematisch dargestellten Weise erfolgen (N = Neutralisation, W = Wasserzugabe):

(A + N) + (B + C) + W + D oder

(A + C) + N + B + W + D oder

(A + B) + N + C + W + D

Es ist in allen Fällen wesentlich, daß die Zusatzstoffe in die noch nicht mit Wasser verdünnten Harzkomponenten eingemischt werden und auch die Mischung der Harzkomponenten vor einer wesentlichen Verdünnung mit Wasser erfolgt. Überdies wird auch bei allen Varianten der erfindungsgemäßen Arbeitsweise vermieden, daß die bereits für die Nachgabe weitgehend mit Wasser verdünnte Hauptbindemittelkomponente unzureichend wasserverträgliche Zusatzstoffe enthält.

Die Art der Hauptbindemittel bzw. der für die Herstellung von Pigmentpasten bevorzugten Bindemitteltypen sind aus der Literatur bekannt. Die Arbeitsweise unter Verwendung der erfindungsgemäßen Pigmentpasten eignet sich insbesondere für Lacksysteme, deren Vernetzung bei erhöhter Temperatur durch Umesterung, Umamidierung, Umurethanisierung oder durch Reaktion endständiger Doppelbindungen erfolgt, da gerade diese Reaktionen durch Katalysatoren wesentlich beeinflußt werden können und daher die optimale Einarbeitung des Katalysators von großer Bedeutung ist. Typische Bindemittel dieser Art sind z. B. in den Europäischen Patentanmeldungen 00 12 463, 00 40 867, 01 62 613, 01 65 799, 01 78 531, 01 79 184 und 01 80 051 bzw. der US 4,174 332 beschrieben.

Pastenharze sind ihrerseits durch ein hohes Pigmentaufnahmevermögen, sowie günstige Viskositäts- und Löslichkeitsparameter ausgezeichnet. Beispiele für solche Pastenharze sind in der AT-PS 377 270, AT-PS 378 963, DE 22 52 536, 25 31 960, 26 34 211, 26 34 229, EU 00 28 402, 00 49 369, 00 76 955, 01 35 651 bzw. der US 4,035 275 zu finden.

Die in der erfindungsgemäßen Pigmentkomponente eingearbeiteten Zusatzstoffe können Katalysatoren, wie Zinn-, Blei-oder Cobaltoctoat oder Dibutylzinndilaurat u. ä. aber auch wasserunverträgliche Lösemittel wie Texanol (2,2,4-Trimethylpentan-1,3-diolmonoisobutyrat), aliphatische oder aromatische Kohlenwasserstoffe, oder Lackhilfsmittel, wie Entschäumer, Haftvermittler etc. sein.

Üblicherweise enthalten die Badmaterialien für die kathodische Elektrotauchlackierung Hauptbindemittel und Pastenharz in einem Verhältnis zwischen 4 : 1 und 2 : 1 und weisen ein Pigment-Bindemittelverhältnis von 0,1 : 1 bis 0,7 : 1 auf.

Die erfindungsgemäßen Pigmentkomponenten enthalten die Harzkomponenten in einem Verhältnis von 70 bis 30 Gew.-% Pigmentpastenharz ("pigment grinding vehicle") zu 30 bis 70 Gew.-% des für das Lacksystem eingesetzten Hauptbindemittels. Vorzugsweise werden die Komponenten in einem Verhältnis von 70 bis 50 Gew.-% zu 30 bis 50 Gew.-% eingesetzt.

Die erfindungsgemäße Pastenharzkombination enthält die für die Elektrotauchlacke üblicherweise eingesetzten Pigmente in einem Pigmentbindemittelverhältnis von 8:1 bis 1:1 (für reine Schwarzlacke) bzw. 12:1 bis 5:1 (für übliche Grundierungen und Einschichtlacke). Die Art der Pigmente ist dem Fachmann bekannt und der einschlägigen Literatur zu entnehmen.

Für die Herstellung der Pastenharzkombinationen können die in der Lackindustrie üblichen Misch-und Mahlaggregate verwendet werden. Die Formulierung und Verarbeitung von Elektrotauchlacken sind dem Fachmann bekannt und bedürfen keiner weiteren Erläuterungen.

Die nachstehenden Beispiele erläutern die Erfindung, ohne sie in ihrem Umfang zu beschränken. Alle Angaben in Teilen oder Prozenten beziehen sich, soferne nichts anderes angegeben ist, auf Gewichtseinheiten.

Folgende Abkürzungen werden in den Beispielen verwendet:

BUGL    Ethylenglykolmonobutylether

CE    technisches Gemisch aus Glycidylestern von 1,1-Dimethyl-($C_7$-$C_9$)carbonsäuren

DGME    Diethylenglykoldimethylether

DEAPA    N,N-Diethylaminopropylamin

DMAPA    N,N-Dimethylaminopropylamin

MOLA    Monoethanolamin

PF 91    Paraformaldehyd, 91 %

PSA    Phthalsäureanhydrid

TDI    Toluylendiisocyanat (80/20)

THMDI    Trimethylhexamethylendiisocyanat

DOLA    Diethanolamin

Als Einzelkomponenten kommen in den Beispielen folgende Produkte zum Einsatz:

## (A) Pigmentpastenharze

(A1) In einem geeigneten Reaktionsgefäß werden 74 Tle PSA mit 162 Tlen eines Oxazolidinderivates bei 75 bis 80°C bis zu einer Säurezahl von 120 mg KOH/g umgesetzt. Das Oxazolidinderivat wird durch Ringschluß aus einem Hydroxyamin aus 24 Tlen MOLA und 100 Tlen CE mit 33 Tlen PF 91 bei 60 bis 120°C unter azeotroper Entfernung von ca 8 Tlen Reaktionswassers hergestellt.

Dem Ansatz werden 320 Tle eines Epoxidharzes auf Basis Polypropylenglykol (Epoxidäquivalent ca. 320) zugegeben und die Mischung bei 120°C bis zu einer Säurezahl von weniger als 3 mg KOH/g verestert. Nach Kühlen auf 70°C werden 52 Tle DEAPA zugesetzt und die Temperatur bis zu einem Epoxidwert von 0 gehalten. Nach Zugabe von 13 Tlen PF 91 werden mit Hilfe von Spezialbenzin (Siedebereich 80 bis 120°C) als Schleppmittel 8 Tle Reaktionswasser azeotrop entfernt. Anschließend wird der Ansatz mit 125 Tlen des wie oben hergestellten Oxazolidins gemischt und auf 30 bis 35°C gekühlt. Dann werden 84 Tle THMDI portionsweise zugesetzt und so lange bei 50°C reagiert, bis alle Isocyanatgruppen verbraucht sind. Nach Entfernen des Schleppmittels wird der Ansatz in 200 Tlen BUGL gelöst. Folgende Kennzahlen wurden ermittelt:

Viskosität : 21.000 mPa.s / 25°C
Oxazolidinäquivalent (ber.) : 624
Aminzahl : 116 mg KOH/g
Aliphatischer Anteil : 59 %
Molekulargewicht (ber.) : 1650
Löslichkeit (1) : 15 mMol Ameisensäure pro 100 g Festharz

(1) Zur Herstellung einer stabilen wäßrigen Dispersion notwendigen Säuremenge.

(A2) In einem geeigneten Reaktionsgefäß werden 320 Tle eines Epoxidharzes auf Basis von Polypropylenglykol (Äquivalentgewicht ca. 320) bei 75 bis 80°C mit 134 Tlen Talgfettamin und 52 Tlen DEAPA bis zu einem Epoxidwert von 0 umgesetzt. Nach Zugabe von 30 Tlen PF 91 werden mit Spezialbenzin (Siedebereich 80 - 120°C) 19 Tle Reaktionswasser azeotrop entfernt. Das Schleppmittel wird anschließend im Vakuum abdestilliert. Das Harz weist folgende Kennzahlen auf:

Viskosität : 1500 mPa.s / 25°C
Oxazolidinäquivalent (ber.) : 574
Aminzahl : 141 mg KOH/g
Aliphatischer Anteil : 86 %
Molekulargewicht (ber.) : 1034
Löslichkeit (s.o.) : ohne Säurezusatz löslich

(A3) In einem geeigneten Reaktionsgefäß werden 440 Tle eines epoxidierten Polybutadienöles (Molekulargewicht ca. 1400, Epoxidäquivalent ca. 440) mit 92 Tlen DMAPA (0,9 Mol) in Anwesenheit von 0,5 Tlen 2,6-Ditert.-butyl-4-methylphenol (Inhibitor) bei 160 bis 200°C umgesetzt, bis alle Epoxidgruppen verbraucht sind. Nach Kühlen auf 80°C werden 30 Tle PF 91 (0,9 Mol) zugegeben und mit Spezialbenzin (Siedebereich 80 -120°C) bei dieser Temperatur 18 Tle Reaktionswasser azeotrop entfernt. Nach Abziehen des Schleppmittels unter Vakuum wird der Ansatz in 59 Tlen BUGL gelöst. Das Harz weist folgende Kennzahlen auf:

Viskosität : 2600 mPa.s / 25°C
Oxazolidinäquivalent (ber.) : 604
Aminzahl : 185 mg KOH/g
Aliphatischer Anteil : 80 %
Molekulargewicht (ber.) : 1632
Löslichkeit (s.o.) : 25 mMol Ameisensäure pro 100 g Festharz

## (B) Hauptbindemittel

(B 1) In einem geeigneten Reaktionsgefäß werden 228 Tle Bisphenol A (1 Mol) mit 260 Tlen DEAPA (2 Mol) in Gegenwart von 131 Tlen Toluol auf 75°C erwärmt und dem Ansatz anschließend unter leichtem Kühlen 66 Tle PF 91 (2 Mol) zugefügt. Die Temperatur wird langsam gesteigert, bis sich eine zügige azeotrope Destillation einstellt. Nach Abtrennen von 42 Tlen Reaktionswasser wird das Toluol im Vakuum abdestilliert und das Produkt in 152 Tlen DGME gelöst. Nach Kühlen auf 30°C werden innerhalb von 45 Minuten 608 Tle eines mit 2-Ethylhexanol halbblockierten TDI (2 Mol) zugegeben. Nach Erreichen eines NCO-Wertes von praktisch 0 werden 1400 Tle dieser Lösung mit einer Lösung von 190 Tlen eines Epoxidharzes auf Basis von Bisphenol A (Epoxidäquivalentgewicht ca. 190) und 250 Tlen CE (1 Mol) in 389 Tlen DGME versetzt und bei 95 bis 100°C bis zu einem Epoxidwert von 0 umgesetzt.

75 Tle Festharz dieser Lösung werden mit 25 Tlen (Festharz) der unten angeführten Polyhydroxylverbindung gründlich vermischt und 35 mMol Ameisensäure versetzt. Anschließend wird mit deionisiertem Wasser eine 40%ige Dispersion hergestellt.

Die eingesetzte Polyhydroxylverbindung ist nach Protonierung wasserlöslich und weist ein OH-Äquivalentgewicht von ca. 145 auf. Sie ist ein in bekannter Weise hergestelltes Umsetzungsprodukt aus 1 Mol eines Epoxidharzes auf Basis von Bisphenol A (Epoxidäquivalentgewicht ca. 475) mit 2 Mol DOLA, 70%ig in Methoxypropanol.

(B 2): In einem mit Rührer, Thermometer und Rückflußkühler ausgestatteten Reaktionsgefäß werden 1000 Tle eines Epoxidharzes auf Bisphenol A-Basis (Epoxidäquivalent ca. 500) in 492 Tlen Ethylglykolacetat bei 60 bis 70°C gelöst, 0,2 Tle Hydrochinon und 144 Tle Acrylsäure zugegeben und die Temperatur auf 100 bis 110°C gesteigert. Die Reaktion wird bei dieser Temperatur bis zu einer Säurezahl von unter 5 mg KOH/g geführt (DBZ = 1,75). Anschließend wird das Reaktionsprodukt bei 60 bis 70°C mit 652 Tlen einer 70%igen Lösung eines basischen Monoisocyanates versetzt und bis zu einem NCO-Wert von praktisch Null reagiert (DBZ = 1,25, BNZ = 1,1). Nach Zusatz von 60 Millimol Ameisensäure pro 100 g Festharz wird mit deionisiertem Wasser eine 35%ige Dispersion hergestellt.

Das basische Monoisocyanat ist ein Umsetzungprodukt aus 1 Mol TDI und 1 Mol DOLA, 70%ig in Methylisobutylketon.

DBZ: Doppelbindungszahl: entspricht der Anzahl der endständigen ethylenischen Doppelbindungen pro 1000 Molekulargewichtseinheiten

BNZ: Basenzahl: entspricht der Anzahl der basischen N-Gruppierungen pro 1000 Molekulargewichtseinheiten

(B 3): 700 Tle eines handelsüblichen Polybutadienöls werden in bekannter Weise in Gegenwart von 0,5 Tlen Diphenylparaphenylendiamin (Inhibitor) bei 200°C mit 100 Tlen Maleinsäureanhydrid so lange reagiert, bis dieses vollständig gebunden ist. Nach Kühlen auf 100°C werden 130 Tle 2-Ethylhexanol zugesetzt und bei 120°C bis zum Erreichen der theoretischen Säurezahl des Halbesters verestert.

110 Tle dieses Vorprodukts (entsprechend ca. 0,12 COOH-Gruppen) werden mit 212 Tlen eines Bisphenol A-Diepoxidharzes (Epoxidäquivalent ca. 190) in 80%iger Lösung in DGME bei 120°C bis zu einer Säurezahl von praktisch Null umgesetzt. Nach Zusatz von 108 Tlen DGME, 59 Tlen DEAPA (0,45 Mol) und 59 Tlen 2-Ethylhexylamin (0,45 Mol) wird der Ansatz bei 65 bis 70°C bis zu einem Epoxidwert von praktisch Null reagiert. Nach Erreichen dieses Wertes werden 114 Tle Bisphenol A (0,5 Mol) und 50 Tle PF 91 (1,5 Mol) zugegeben und die Reaktion bei 60°C bis zum Erreichen eines Gehaltes an freiem Formaldehyd von 0,5 bis 1 % geführt. Der Ansatz wird nach Zusatz von 40 Millimol Ameisensäure pro 100 g Festharz mit deionisiertem Wasser auf einen Festkörpergehalt von 45% verdünnt.

Das eingesetzte Polybutadienöl ist flüssig und weist ca. 75 % 1,4 cis-, ca. 24 % 1,4-trans-und ca. 1 % Vinyl-Doppelbindungen auf; das Molekulargewicht beträgt ca. 1500 ± 15 %, die Jodzahl ca. 450 g / 1000 g.

(C) Zusatzkomponenten

(C1) Dibutylzinndilaurat: in lösemittelfreier Form mit einem Metallgehalt von ca 18%;

(C2) Dibutylzinnoxid: in fester Form; Metallgehalt ca 48%;

(C3) Bleioctoat : als 90%ige Lösung in einem Kohlenwasserstoffgemisch (Metallgehalt ca 31%);

(C4) Cobaltoctoat: als 80%ige Lösung in Lackbenzin (Metallgehalt ca 11%);

(C5) Netzmittel auf Basis eines Acetylenalkohols; eingesetzt als 50%ige Lösung in Ethylenglykolmonoethylether

## (D) Pigmentzusammensetzungen

| Tle | (D1) | (D2) | (D3) |
|---|---|---|---|
| Farbruß | 2 | 9 | 3 |
| Aluminium-Silikatpigment | 10 | 66 | 20 |
| Titandioxid | 82 | 10 | 77 |
| bas. Bleisilikat | 6 | 15 | -- |

Beispiele 1 bis 4 und Vergleichsbeispiele V1 bis V3

Herstellung der Pigmentpastenkomponenten gemäß Erfindung

Das im organischen Lösemittel gelöste Hauptbindemittel (Komponente B) wird bei Raumtemperatur oder gegebenenfalls bei erhöhter Temperatur (max. 80°C) mit der Zusatzkomponente (Komponente C) ca. 30 Minuten gründlich vermischt. Anschließend wird das Pigmentpastenharz (Komponente A) sowie gegebenenfalls weitere Zusätze, wie Entschäumer oder andere Lackhilfsmittel weitere 30 Minuten eingemischt. Als nächstes wird die Neutralisationssäure und anschließend deionisiertes Wasser eingerührt, sodaß ein wäßriger Klarlack mit dem gewünschten Festkörpergehalt und Viskosität ensteht. Nach Zugabe der Pigmente wird der homogenisierte Ansatz auf einem geeigneten Mahlaggregat, vorzugsweise einer Perl- oder Sandmühle vermahlen.

Die Ansätze sind in der folgenden Tabelle zusammengefaßt. Alle Angaben in Teilen beziehen sich auf Feststoff.

Tabelle 1

| Beispiel | Tle (A) | Tle (B) | Tle (C) (1) | Tle (D) | Säure (2) | FKP (3) | P/B (4) |
|---|---|---|---|---|---|---|---|
| 1 | 5,3 (A1) | 2,7 (B1) | 0,92 (C1) 0,6 (C5) | 48 (D1) | 130 AS | 58 | 6:1 |
| 2 | 6,7 (A1) | 3,3 (B1) | 0,92 (C1) 0,6 (C5) | 30 (D2) | 110 ES | 47 | 3:1 |
| 3 | 5,3 (A2) | 2,7 (B2) | 0,57 (C3) | 40 (D1) | 120 AS | 55 | 5:1 |
| 4 | 6,0 (A3) | 6,0 (B3) | 0,228 (C4) 0,35 (C5) | 48 (D3) | 95 ES | 51 | 4:1 |

(1)  berechnet als Metall

(2)  mMol Säure/100 g Festharz

AS = Ameisensäure, ES = Essigsäure

(3)  Festkörpergehalt der Pigmentpaste in % nach
Verdünnen mit deionisiertem Wasser

(4)  Pigment-Bindemittelverhältnis

Die Herstellung der Pasten kann auch in der in der Beschreibung angegebenen Weise variiert werden, ohne daß eine wesentliche Änderung bei der Prüfung festzustellen ist.

In der Tabelle 2 ist die Zusammensetzung der Vergleichsbeispiele (V1) bis (V3) angegeben. Bei den Vergleichsbeispielen (V1) und (V2) werden die Zusatzstoffe in der bei (C) angegebenen Form mit der gleichen Menge Ethylenglykolmonobutylether verdünnt und dem wäßrigen pigmentierten Lackbad zugesetzt. Beim Vergleichsbeispiel (V3) wird das als Feststoff vorliegende unlösliche Dibutylzinnoxid zusammen mit den Pigmenten in üblicher Weise vermahlen.

Tabelle 2   (alle Tle sind Tle Feststoff)

| Ver-gleich | Tle (A) | Tle (C) | Tle (D) | Säure | FKP | P/B |
|---|---|---|---|---|---|---|
| V1 | 4,0 | —— | 48 (D1) | 120 AS | 68 | 12:1 |
| V2 | 4,8 | —— | 48 (D1) | 120 AS | 64 | 10:1 |
| V3 | 4,8 | 0,92 (C2) | 48 (D3) | 120 ES | 64 | 10:1 |

Prüfung der erfindungsgemäßen Pigmentpasten im Vergleich zur Arbeitsweise gemäß Stand der Technik

In der Tabelle 3 wird die Zusammensetzung der ETL-Bäder angegeben, wie sie beim Vermischen der Pigmentpastenkomponente und der Klarlackkomponenten (Hauptbindemittel) erhalten werden.
In der Tabelle 3 werden weiters die Verarbeitungseigenschaften, Stabilitätseigenschaften und Auswirkungen auf die Filmbeschaffenheit bzw. Filmbeständigkeit angegeben.

Tabelle 3

| Beispiel | 1 | 2 | 3 | 4 | V1 | V2 | V3 |
|---|---|---|---|---|---|---|---|
| **Klarlackkomponente:** | | | | | | | |
| Tle (B) | 112(B1) | 110(B1) | 112(B2) | 108(B3) | 116 | 115,2 | 115,2 |
| Tle Säure | 40 AS | 40 AS | 10 AS | 45 AS | 40 AS | 40 AS | 40 AS |
| Zusätze | --- | --- | --- | --- | 0,92 C1 | 0,92 C1 | --- |
| mit $H_2O$ auf % FKP | 12,5 | 12,15 | 12,4 | 12,6 | 12,6 | 12,6 | 12,6 |
| **Pigmentpaste** Tle gemäß Beispiel | 57,52 | 41,52 | 48,57 | 60,6 | 52,0 | 52,8 | 53,7 |
| **Kenndaten des Lackes:** | | | | | | | |
| Festkörpergehalt % | 17 | 15,2 | 16 | 16,8 | 16,9 | 16,9 | 16,9 |
| P/B | 0,4:1 | 0,25:1 | 0,4:1 | 0,5:1 | 0,4:1 | 0,4:1 | 0,4:1 |
| MEQ-Wert | 46 | 46 | 17,3 | 51,5 | 42,7 | 43,2 | 42,3 |
| **Verarbeitungsdaten** | | | | | | | |
| Siebrückstand | 7 | 15 | 12 | 0 | 58 | 72 | 528 |
| Horizontalbeschichtung | i.O. | LM | i.O. | i.O. | M, S | M, S | n.i.O. |
| Rührstabilität Wochen | über 6 | über 6 | über 4 | über 4 | 1 | 0,5 | 0 |
| Einbrenntemperatur 30 min bei | 160 | 170 | 160 | 170 | 170 | 170 | 170 |
| Salzsprühtest ASTM-B 117-64, Stunden | über 1500 | über 1500 | über 1500 | über 1200 | 1000 | 850 | 750 |

9

Durchführung der Prüfungen:

Siebrückstand: 1 Liter der verdünnten Lacklösung wird durch ein gewogenes Perlonsieb (Maschenweite 28 μm) gegossen. Das Sieb wird mit deionisiertem Wasser nachgespühlt und nach Trocknung (1 Stunde/110°C) gewogen. Das Ergebnis wird in mg Rückstand angegeben.

Horizontalbeschichtung: Ein zinkphosphatiertes Stahlblech (ca. 10 x 20 cm) wird in der Mitte rechtwinkelig gebogen. Das Blech wird im Beschichtungbad so eingehängt, das sich ein Schenkel des gebogenen Bleches horizontal 15 cm unter der Oberfläche des Lackbades befindet. Die Beschichtung erfolgt bei abgestellter Rührung und mit einer Beschichtungsdauer von 4 Minuten. Nach Ende der Beschichtung verbleibt das Blech noch 2 Minuten im Bad. Anschließend wird das Blech aus dem Bad genommen, nach weiteren 2 Minuten mit Wasser gespült und eingebrannt. Das Blech wird visuell hinsichtlich Verlauf, Glanz und Sedimentationserscheinungen beurteilt.

Rührstabilität: Das Bad wird im offenen Gefäß bei 25 ± 2°C ständig gerührt. Nach der angegebenen Zeit zeigen die elektrische Abscheidung und die abgeschiedenen Filme keine wesentliche Veränderung gegenüber dem Frischzustand (nach 24 Stunden Homogenisierung).

Die Abkürzungen in der Tabelle 3 haben folgende Bedeutung:

i.O. Beschichtung in Ordnung, keine Sedimentationserscheinungen

LM leichte Mattierung

M Film matt, noch keine Verlaufstörungen

S deutliche Sedimentationserscheinungen

n.i.O. Film unbrauchbar

Salzsprühtest nach ASTM -B 117-64. Geprüft wird ein auf zinkphosphatiertem Stahlblech mit einer Schichtstärke von 22 ±2 μm elektrisch abgeschiedener Film, welcher bei den in der Tabelle angegebenen Bedingungen eingebrannt wurde.

## Ansprüche

1. Verfahren zur Herstellung von Pigmentpasten für wasserverdünnbare Lacke, insbesondere für das Zweikomponenten-Nachsetzverfahren bei der Elektrotauchlackierung mit katalysierten Lacksystemen, welches dadurch gekennzeichnet ist, daß man in das für das Lacksystem eingesetzte Pigmentpastenharz (A) die Gesamtmenge oder einen Teil der notwendigen Katalysatoren und/oder anderer Zusatzstoffe (C) und einen Teil des für das Lacksystem eingesetzten Hauptbindemittels (B), vor oder nach der Vermahlung mit den Pigmenten (D) bzw. vor oder nach der teilweisen oder vollständigen Neutralisation der salzbildenden Gruppen, homogen einmischt.

2. Verfahren nach Anspruch 1, dadurch gekennzeichnet, daß man (A) 70 bis 30, vorzugsweise 70 bis 50 Gew.-% eines Pigmentpastenharzes (A) mit (B) 30 bis 70, vorzugsweise 30 bis 50 Gew.-% des für das Lacksystem eingesetzten Hauptbindemittels (B), welches mit der Gesamtmenge oder einem Teil der für das Lacksystem erforderlichen Zusatzkomponenten (C) homogen vermischt ist, mischt und nach vollständiger oder teilweiser Neutralisation der salzbildenden Gruppen soweit mit Wasser verdünnt, daß nach Zugabe der Pigmente (D) für die nachfolgende Vermahlung eine für das Mahlaggregat optimale Viskosität erreicht wird.

3. Verfahren nach Anspruch 1, dadurch gekennzeichnet, daß man die Komponenten in der Reihenfolge

(A + N) + (B + C) + W + D oder

(A + C) + N + B + W + D oder

(A + B) + N + C + W + D

mischt, wobei A - D die im Hauptanspruch genannten Komponenten, N die Neutralisation und W die Wasserzugabe bedeuten.

4. Verfahren nach den Ansprüchen 1 bis 3, dadurch gekennzeichnet, daß man als Komponente (C) als weitere Zusatzstoffe wasserunverträgliche Lösemittel und/oder Lackhilfsmittel einmischt.

5. Pigmentpasten hergestellt nach den Ansprüchen 1 bis 4, dadurch gekennzeichnet, daß sie ein Pigmentbindemittelverhältnis von 1:1 bis 12:1 aufweisen.

6. Verwendung der nach den Ansprüchen 1 bis 4 hergestellten Pigmentpasten in Elektrotauchlacken.

7. Verwendung der nach den Ansprüchen 1 bis 4 hergestellten Pigmentpasten für das 2-Komponenten-Nachsetzverfahren bei der Elektrotauchlackierung.